(19) **Europäisches Patentamt**
**European Patent Office**
**Office européen des brevets**

(11) **EP 1 995 259 B2**

(12) # NEW EUROPEAN PATENT SPECIFICATION
After opposition procedure

(45) Date of publication and mention
of the opposition decision:
**01.01.2014 Bulletin 2014/01**

(45) Mention of the grant of the patent:
**30.03.2011 Bulletin 2011/13**

(21) Application number: **07010447.6**

(22) Date of filing: **25.05.2007**

(51) Int Cl.:
***C08F 10/00*** *(2006.01)*    ***C08F 2/14*** *(2006.01)*
***C08F 2/40*** *(2006.01)*

(54) **Method for producing alpha-olefin polymer resin**

Herstellungsverfahren für ein Alpha-Olefin-Polymerharz

Procédé de production d'une résine en polymère alpha-oléfine

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**26.11.2008 Bulletin 2008/48**

(73) Proprietor: **Borealis Technology Oy**
**06101 Porvoo (FI)**

(72) Inventors:
• **Leskinen Pauli**
**00700 Helsinki (FI)**

• **Vesterberg Torvald**
**06100 Porvoo (FI)**

(74) Representative: **Kador & Partner**
**Corneliusstrasse 15**
**80469 München (DE)**

(56) References cited:
**EP-A- 0 108 432**    **EP-A- 0 549 252**
**EP-A1- 1 731 535**    **EP-B1- 1 183 285**
**WO-A1-96/11961**    **US-A- 4 558 025**
**US-A- 4 634 747**    **US-A1- 2002 123 579**

**Description**

The present invention relates to a process for producing alpha-olefin polymer resins in a polymerisation process comprising at least one slurry reactor. Especially the invention relates to a polymerisation process, where fouling and sheeting problems are decreased.

One problem, which frequently is found especially in slurry phase reactors such as loop reactors, is the adhering of the polymer particles onto the reactor walls. Even slight amounts of polymer in the walls cause that the smoothness of the reactor inside surface disappears, where after the adhering starts to accelerate and causes in the worst case the blocking of the reactor and further conduits of the system. A polymer layer on the reactor surface increases the flow resistance of the polymer suspension and the pumping power required. At the same time the heat transfer efficiency of the reactor decreases and makes the temperature control more difficult. If high polymerisation temperatures are used, the undesired result can be melting of the polymer.

Also in gas phase reactors similar problems can be found. The polymer particles tend to adhere to the reactor surfaces and reactor internals and also polymer particles tend to adhere to each other and form lumps. This will cause flow disturbances in the fluidized bed and local overheating because polymerisation heat cannot be effectively removed from larger polymer lumps. Especially polymer sheets adhering on reactor walls and later detaching cause severe problems in the product quality.

The harmful fouling phenomena described above has been tried to be avoided by adding into the polymerisation reactor antistatic agents, which make the diluent more conductive and thereby prevent at least somewhat the formation of static electric charges. However these kind of antistatic agents are usually harmful for polymerisation catalyst, because they often act at least in some degree as catalyst poisons and thereby decrease catalyst activity and therefore, the productivity. Therefore, the amounts of known fouling preventive agents must generally be rather low, which in turn decreases the effect of the antistatic agent. Similarly various antistatic compounds or fouling or sheeting preventive agents have been added also into the gas phase reactors to decrease fouling and sheeting problems there. Because the polymerisation environments in loop reactors and in gas phase reactors are quite different, it would be often necessary to use different types of antistatic agents in loop and gas phase reactors. Also, higher amounts of antistatic agents are usually necessary in gas phase reactors.

EP 1 183 285 A1 discloses an at least two stage process for the polymerisation of alpha-olefins, especially propylene block copolymers with ethylene, in which process the fouling is reduced in the gas phase reactor and any equipments thereafter. The first stage of the process comprises the forming of the alpha-olefin polymer matrix in at least one bulk reactor and optionally in at least one gas phase reactor and the second stage comprises copolymerisation of alpha-olefins and ethylene in the presence of said polymer matrix of the first stage in at least one gas phase reactor, which acts as a so called rubber phase reactor. According to this EP publication an antifouling composition is fed into said rubber phase reactor. As the antifouling composition a combination of an antistatic agent component and a catalyst killer component is proposed. By the method disclosed in this patent some problems relating to the stickiness problems originating from the use of ethylene as comonomer in said second stage (rubber phase) and post reactor handling steps of the polymer are solved.

However, this method cannot avoid the fouling and sheeting occurring in the first stage reactor, i.e. in a slurry reactor, such as a bulk reactor. If fouling phenomena occurs in the slurry reactor, in addition to the operation problems in the reactor the carrying over of the polymerisation product from the loop reactor into the second stage reactor, i.e. into the gas phase reactor, may undermine the effect provided by providing the anti-fouling composition into the gas phase reactor.

EP 0 820 474 A1 discloses a method for preventing fouling and sheeting in gas phase reactors in the polymerisation or copolymerisation of alpha-olefins in a multistage process comprising one or more loop reactors, by adding the whole amount of certain fouling preventive agents into a loop reactor(s), where at least 30 % of the whole amount of polymer polymerized in the whole process is produced. The core idea of this patent is to use fouling preventive agents, which eliminate the need to add catalyst retarding agents into the gas phase reactor. Thus, as fouling preventive agent is used a composition of alpha-olefin acrylonitrile copolymers and polymeric polyamines or Cr or Ca organic salts stabilized with polymers. Because the used agents do not affect negatively on the catalyst activity, the amount of the fouling agent added into the loop reactor can be reasonable high. Thus, these agents are transferred with the product from the first reactor also to the gas phase reactor, where the desired antifouling effect can be seen.

However, there are restrictions relating to the amounts and types of antistatic agents to be used in many product fields, like in food packaging and in medical field. E.g. FDA regulations set limits to many additives.

EP 0 453 116 A1 relates to a process for the gas phase polymerisation of alpha-olefins which involves a pre-polymerisation step and the use of an alpha-olefin pre-polymer, wherein the pre-polymer introduced into the gas phase (co-)polymerisation comprises an antistatic agent. The antistatic agent may be a composition or a mixture containing at least one metal salt of an organic carboxylic acid, optionally substituted with a sulfonic acid. The essential feature of this patent is that the used antistatic agents do not decrease the catalytic activity, or the activity can even be increased.

Further, WO2003/033543 discloses use of antistatic agent in gas phase polymerisation process. As antistatic agent is used e.g. sorbitan mono oleate type compounds in combination of water, peroxide and/or salt and is added directly to the gas phase reactor.

EP 0 549 252 discloses an olefin polymerization process in a gas phase fluidized bed reactor, wherein a component comprising a solid catalyst component, a cocatalyst, an activator, an activity retarder, and at least one olefin is introduced into the reactor. The solid catalyst component, cocatalyst or activity retarder are fed together with carrier gas.

US 4,634,747 discloses a process for the polymerization of olefins in the presence of an organo aluminum compound, a transition metal component, an organometallic compound and further an oxygen containing compound, which is an internal electron donor.

US 4,558,025 discloses a transition metal containing catalyst component comprising the solid reaction product of an inert solid support material with an organometallic compound, an oxygen containing compound which is an internal electron donor, an acyl halide, a transition metal compound and a Group IIIa metal hydrocarbyl dihalide.

Problems, as is evident from prior art documents, relating to the sheeting and blocking problems due to the static electricity, are tried to be solved by adding antistatic agents into the actual polymerisation reactors, or in case of a gas phase one stage polymerisation into the prepolymerisation reactor or directly to the gas phase reactor. According to the prior art catalyst activity should not be decreased, if antistatic agent is fed to the prepolymerisation reactor or into the first actual polymerisation step of a multistage polymerisation process. A relevant problem relates also to the used of antistatic or antifouling agents. However, the type or amount needed is often not allowed to be used in food and medical applications.

An additional reason for fouling problems can, however, be a too active catalyst, which results in sticky material, agglomerations and thus blocking problems. Especially by polymerising ethylene as such or as a comonomer with other alpha-olefins, e.g. propylene, fouling problems of this type can occur. Especially polymerisations run in a multistage process comprising a slurry reactor as a first actual polymerisation reactor suffer from these problems. These fouling problems can even restrict the amount of ethylene used as comonomer at the first stage. Use of antistatic agents as such does not solve this problem as a whole, but other solutions have to be found. The problem can be seen, when high activity catalysts of any type, like high activity heterogeneous Ziegler-Natta or single-site catalyst are used.

Therefore, it is the object underlying the present invention to provide an improved process for the preparation of alpha-olefin polymer resin which provides counter-measures for effectively and securely preventing fouling and sheeting in each of the polymerisation steps of a single or multi-stage alpha-olefin polymerisation process, comprising at least one slurry reactor.

A further object of the invention is to minimize the amount of additives, i.e. fouling preventive agents in the process and in the final product.

Still an additional beneficial object of the invention is the possibility to use fouling preventive agents, which are allowed to use also in food and medical applications.

Further, one desired object of the invention is to produce propylene random copolymers with ethylene, where a polymer matrix is produced at the first stage of the multistage process, and which matrix has a reasonable high amount of ethylene. By higher ethylene content in the polymer matrix of propylene copolymer some special polymer properties can be achieved. Due to the fouling and stickiness problems of prior art ethylene content in the polymer produced in the slurry reactor of the first stage has been kept usually at a reasonable low level.

The above objects have been now surprisingly and effectively solved by the process according to claim 1. Preferred embodiments are defined in the dependent claims.

Accordingly, the present invention resides in the finding of a method for producing alpha-olefin polymer resin in the presence of a particulate alpha-olefin polymerisation catalyst in a polymerisation process comprising at least one slurry phase polymerisation step, wherein the catalyst particles are contacted with a catalyst poisoning agent before contacting alpha-olefin monomers in said slurry phase polymerisation step.

It has now been surprisingly found by the present inventors that contacting a catalyst activity retarding agent or catalyst poisoning agent, which terms can be used exchangeable in this application, with the catalyst particles before contacting the particles with the alpha-olefin monomers in the first actual polymerisation step being a slurry phase polymerisation step, is highly advantageous for avoiding fouling and/or sheeting in a single stage polymerisation process or in all stages of multi-stage polymerisation process used for the preparation of the alpha-olefin polymer resins.

Further, it has been noted that the catalyst particles should be contacted with the catalyst poisoning agent preferably before essentially any reaction with a cocatalyst and the catalyst particles takes place.

In a preferred mode the contact between the catalyst poisoning agent and catalyst particles is carried out before or during a prepolymerisation step, which precedes the first actual polymerisation step.

In the present invention it is preferred to feed the catalyst poisoning agent to the pre-polymerisation step together with the particulate catalyst component and after that to add to this feed alpha-olefin monomer(s) or to add monomers separately to the prepolymerisation reactor. Further, it is preferred that the catalyst poisoning agent can react with the surfaces of catalyst particles before they are contacted and reacted with any cocatalyst used during the prepolymerisation step. However, presence of small amounts of cocatalysts at this step are in practice not detrimental to the effect desired, if the above reaction can happen.

The catalyst poisoning agent can be used as such, optionally dissolved in a suitable solvent, or it can be a part of an antifouling composition, or it is possible to add the catalyst poisoning agent together with an additional antifouling agent.

Special benefits achieved by the invention can be seen, as propylene random copolymers with ethylene are produced, and especially, if reasonable high amount of ethylene is copolymerized with propylene at the first polymerisation stage comprising a slurry step.

In the pre-polymerisation stage the alpha-olefin monomers may be propylene, ethylene or other alpha-olefin monomers, preferable propylene and/or ethylene.

By "alpha-olefin monomer" in this connection is meant a compound having the structure $CH_2=CHR$, wherein R is hydrogen or a linear, branched or cyclic alkyl group. In particular R is hydrogen or a linear or branched alkyl group having 1 to 19 carbon atoms, preferably 1 to 11 carbon atoms or a cyclic alkyl group having 4 to 8 carbon atoms. The alpha-olefin monomer used in the present invention is propylene. Propylene is copolymerised with ethylene.

In the present invention random propylene copolymerisation is carried out. Propylene and ethylene, are subjected to copolymerisation, preferably, in a plurality of polymerisation reactors connected in series.

Especially preferred mode is to polymerise propylene with ethylene in a multistage process comprising at least two polymerisation stages and before the first actual polymerisation stage a prepolymerisation step, and where propylene-ethylene random polymer is produced at the first stage comprising at least one slurry reactor and optionally a gas phase reactor, and polymerisation is continued at the second stage comprising at least one gas phase polymerisation reactor with or without additional monomer feed. Different amounts of hydrogen can be used as a molar mass modifier or regulator in any or every reactor.

The present invention provides a process for producing a propylene random copolymer with ethylene and the total comonomer content being 2 to 9 wt-%, preferably 3 to 8 wt-%. Polymer produced at the first slurry polymerisation stage, e.g. in a bulk reactor, may comprise 1 to 6 wt-%, preferably 2 to 5 wt-% and more preferably 3 to 5 wt-% of ethylene.

In producing propylene copolymers in a process comprising in addition to the polymerisation steps a prepolymerisation step, the amount of ethylene in the prepolymerisation step can be up to 5 wt-%.

Other multistage polymerisation process alternatives include a process comprising at least two slurry reactors for actual polymerisation, which can optionally be followed by one or more gas phase reactors, and where preferably a prepolymerisation step precedes the first polymerisation step.

A single stage polymerisation process according to the invention can comprise in addition to a slurry phase reactor a prepolymerisation step.

Prepolymerisation can be carried out in a separate prepolymerisation reactor (used in a continuous process) or in the actual polymerisation reactor before the actual polymerisation starts, if the process is run batchwise. During the prepolymerisation step the temperature is usually lower than in polymerisation step, and only a few wt-% of the total amount of polymer is produced in the prepolymerisation step.

Catalyst and catalyst systems used in the present invention are any catalyst systems being able to polymerise alpha-olefins. The preferred catalyst system used comprises a heterogeneous high yield Ziegler-Natta catalyst system including a solid catalyst component, a co-catalyst component, and optionally an external donor (used in propylene polymerisation). Another preferred catalyst system is a heterogeneous single site-based catalyst system, the catalyst component having e.g. a bridged ligand structure giving high stereoselectivity and being suitable for polymerising the desired alpha-olefins into polymers.

Said catalysts comprise a catalyst component comprising a compound of a transition metal belonging to groups 4 to 10, preferably to groups 4 to 6, of the Periodic Table of Elements (IUPAC 1990), or lanthanide or actinide, and a co-catalyst based on an organic compound of a metal belonging to any of groups 1 to 3 and 13 of said Table.

In Ziegler-Natta type catalysts typical compounds of transition metals are halides, preferably chlorides, especially the tetrachloride of titanium. Typical organometallic co-catalysts are organoaluminium compounds such as alkyl aluminium compounds, typically trialkyl aluminium compounds with alkyl groups having 1 to 10 C-atoms, preferably 1 to 6 C-atoms. Typical cocatalyst used is triethyl aluminium.

Catalysts can be supported on external carrier materials, as typical examples being inorganic oxides, like silica, and magnesium dichloride. In addition it is known to use e.g. polymeric support materials. An other alternative to prepare solid catalysts components, both of Ziegler-Natta and single site type is based on an liquid/liquid at least two phase emulsion method, where liquid droplets forming the dispersed phase contain catalyst compounds. After solidifying the droplets of the dispersed phase solid catalyst particles with uniform and compact morphology are formed, however without using any external support material. This type of catalyst preparation is described e.g. in patent publications WO 03/000757, WO 03/000754, WO 2004/029112, WO 03/106510 and WO 03/051934 which are mentioned here as references.

External electron donors, which form part of the Ziegler-Natta catalyst system for propylene polymerisation, are well known in the art and include ethers, esters, polysilanes, polysiloxanes and alkoxysilanes, typically alkyl alkoxy silanes compounds, such as cyclohexyl methylmethoxy silanes or dicyclopentyl dimethoxy silanes External donors are typically added separately to the actual polymerisation step or can be added at least partly also to the prepolymerisation step.

In the present invention the multistage process is defined to be a polymerisation process in which a polymer comprising two or more fractions is produced by producing each or at least two polymer fraction(s) in a separate reaction stage, in the presence of the reaction product of the previous stages which comprises a polymerisation catalyst.

The first reaction stage of such a multistage process, after the prepolymerization step, comprises a slurry phase polymerisation step and optionally a gas phase polymerisation step, and the subsequent reaction stage may comprise another slurry phase polymerisation step or one or more gas-phase polymerisation steps. The slurry phase polymerisation step may advantageously be carried out in a so-called slurry reactor.

For the purpose of the present invention, "slurry reactor" designates any reactor, such as a continuous or simple batch stirred tank reactor or loop reactor, operating in bulk or slurry and in which the polymer forms in particulate form. "Bulk" means a polymerisation in a reaction medium that comprises at least 60 wt-% monomer. According to a preferred embodiment the slurry reactor comprises a bulk loop reactor.

The bulk loop reactor can be of conventional design, which includes means for feeding various feed components to the reactor, means for circulating the polymer suspension through the reactor, heat transfer means for removing heat of polymerisation and means for discharging polymer slurry from the reactor.

After carrying out the first step polymerisation, the reaction mixture is usually discharged from the first, preferably loop reactor and the polymer may be transferred into a second loop reactor or one or more gas-phase reactors, where the polymerisation can be completed in the presence of the polymer produced in the previous step, optionally additional alpha-olefin monomer and optionally hydrogen and/or other comonomers. The reaction mixture may be removed from the loop reactor either continuously or intermittently by conventional means and transferred to the subsequent reactor(s).

By "gas phase reactor" is meant any mechanically mixed or fluid bed reactor. Preferably the gas phase reactor comprises a mechanically agitated fluid bed reactor with gas velocities of at least 0.2 m/sec.

The gas phase reactor can be a conventional fluidized-bed reactor, although other types of gas-phase reactors can also be used. In the fluid-bed reactor the bed may comprise formed and growing polymer particles as well as catalyst components. The bed is preferably kept in fluidized state by introducing gaseous components, such as propylene and/or ethylene at a velocity sufficient to cause the particles to act as a fluid. The fluidizing gas can include also inert carrier gases, such as nitrogen and also hydrogen, if desired as a modifying component.

It is common knowledge that the polymer matrix, which may comprise random, homo/random or random/random (co)polymers with a comonomer content needed to obtain the desired properties, can preferably be prepared at the first stage of the polymerisation process. The first stage comprises bulk reactor, preferably loop reactor(s) and optionally gas phase reactor(s).

The above multistage polymerisation process is preferably preceded according to the present invention by a pre-polymerisation step. In such a step the catalyst can be pre-polymerised prior to feeding into the first polymerisation reactor of the series. During pre-polymerisation the catalyst components are contacted with the monomer, e.g. propylene and/or ethylene, before feeding into the reactor.

According to the present invention, in the pre-polymerisation step alpha-olefin monomers are polymerised in the presence of a catalyst in an amount of at most 10 wt.-% of the total amount of polymer produced in the whole process. Preferably the amount of polymer produced in the prepolymerisation step is 0.1 to 7 wt-%, more preferably 1 to 5 wt-% and very often only 1 to 3 wt-% of the total polymer amount produced by the process.

In one specific embodiment, the catalyst component used in the process is the heterogeneous Zieger-Natta type catalyst, which however, does not contain any external carrier, but is prepared using an emulsion method as described above.

The polymer produced in the pre-polymerisation step may be transferred directly to the first polymerisation step, together with the catalyst used in the pre-polymerisation step.

According to the present invention the catalyst retarding or poisoning agent is contacted with the catalyst particles before contacting the catalyst particles with the alpha-olefin monomers in the first polymerisation step, i.e. in the slurry phase polymerisation step. Preferably, contacting with the catalyst poisoning agent is carried out during or before the pre-polymerisation step. As a result it is possible to avoid fouling and/or sheeting of the polymer particles in the actual polymerisation process comprising at least one slurry reactor. In order to achieve the best results, it is beneficial to contact the catalyst poisoning agent with the catalyst particles before catalyst particles are reacted with the cocatalyst. In one embodiment the catalyst poisoning agent should be contacted the catalyst particles before the prepolymerisation step, e.g. in the feed line of the catalyst and poisoning agent, where after monomers and cocatalyst can be added separately to the prepolymerisation reactor or combined into the same feed with the catalyst.

While pre-polymerisation is generally known in the polymerisation of alpha-olefin polymers, it was standard knowledge in the art that in the use of a multi-stage polymerisation process, the addition of anti-static agents needs to be done at least in one of the bulk and gas phase reactors to avoid the above fouling and/or sheeting phenomenon in each of the separate reactor dependent on separate conditions in each of the reactors. However, according to the present invention the above advantages can be achieved by adding the catalyst retarding or catalyst poisoning agent before any actual polymerisation step.

As disclosed, said catalyst retarding agents can be added as such or together with commonly used antifouling agents or they can be part of an antifouling agent composition. If needed, additional antifouling agents without any catalyst poisoning agent can be added also at actual polymerisation stages. However, the effect of the catalyst poisoning agent added according to the invention i.e. before contacting the catalyst particles with the monomers in the slurry reactor, e.g. during or before a prepolymerisation step, is usually so efficient that no later antifouling agent addition is needed.

A special advantage achieved by adding the catalyst poisoning agent before or during the prepolymerisation step is that higher comonomer amounts are possible to be incorporated into the alpha-olefin copolymer in the first stage, preferably loop reactor, because agglomeration/stickiness problems are essentially reduced.

The inventive catalyst poisoning agents are selected from alcohols with 1 to 6 C-atoms, especially 1 to 3 C-atoms, like methanol, ethanol and isopropanol and a combination with an organic compound having at least one polar functional group, such as -OH, -O-, -OR, -COOH, -SO$_2$(OH), or-(C=O)-NH-group. Alcohols, like the ones mentioned above can suitably be combined with other polar compounds, like acidic compounds, such as alkyl sulphonic acids, especially dinonyl naphthyl sulphonic acid. These compounds can be used alone or in combination. If needed, the catalyst poisoning agent can be dissolved into a suitable solvent.

As disclosed above the catalyst poisoning agent can be used as a separate agent or it can be a part of an antifouling or antistatic agent or composition. Catalyst poisoning agent can also be used in combination with other antistatic agents, if desired.

However, essential is, that catalyst retarding or poisoning agent is added into the process, preferably into the pre-polymerisation reactor in an amount sufficient to prevent fouling and/or sheeting in each of the reactors as used. It is specifically preferred to add the poisoning agent in or before the pre-polymerization step as described above in an amount of from 0.1 to 10.0 wt- ppm, preferably 0.1 to 5.0 wt-ppm, more preferably 0.2 to 3.0 wt-ppm calculated from the total alpha-olefin feed to the pre-polymerisation and slurry, preferably loop reactor. The most suitable amount depends on the poisoning effect of the poisoning agent. The higher the poisoning effect on the catalyst used is, the smaller amount of the agent can be used. Thus, the most suitable amount of poisoning agent is dependent on the type of poisoning agent, on the catalyst used and on the desired effect level.

As one example of antistatic compositions, which comprises components acting as catalyst poison, is e.g. a composition sold under the name Octastat®. This composition contains e.g. aromatic solvents, like petroleum, C$_{1-6}$ alkyl alcohols and sulfonic acids. This type of composition is known to be used in polymerisation process, where it is added to the actual polymerisation step.

There are also other well known antistatic agents, such as sorbitan monooleate type antistatics, used in the polymerisation processes, which can be used in combination with catalyst poisoning agent according to the invention.

As a preferred embodiment of the present invention, the method is used for producing random propylene copolymers having a reasonable high C$_2$ content. Very often viscosity increase, friction increase, resistance of flow and velocity drop causing stickiness and fouling problems occur. These problems and deficiencies can now be overcome by using the catalyst poisoning agent according to the present invention in the random propylene copolymer preparation especially in a multistage process comprising at least one slurry phase polymerisation step.

With the present invention it is thus possible to get high comonomer content in the polypropylene with usual equipment. Moreover, very high comonomer contents may be produced in the first loop reactor. Preferably, the comonomer, ethylene, content of such a random alpha-olefin copolymer is about 1 to about 7 wt-%, more preferably about 1 to 7 wt-%, of the total alpha-olefin, propylene copolymer produced in the loop reactor without any fouling problems. As regards operability it is beneficial that e.g. decreased power consumption of the pumps is needed in the system, specifically in the loop recycling pumps, and further, less other operability problems will arise.

In the following, the present invention will be illustrated by specifically preferred Examples, representing the invention compared to Comparative Examples being outside the present invention.

**Methods**

a. Melt flow rate

The melt flow rate is determined according to ISO 1133 and it is indicated in g/10min. The MFR is an indication of the flowability and thus the processability of the polymer. The higher the melt flow rate, the lower the viscosity of the polymer. The MFR of the propylene copolymer polymer is measured with a load of 2.16 kg at 230°C.

b. Xylene solubles

Xylene solubles (XS) values are measured according to the following method:

2.0 g of polymer are dissolved in 250 ml p-xylene at 135 °C under agitation. After 30 ± 2 minutes the solution is allowed to cool for 15 minutes at ambient temperature and then allowed to settle for 30 minutes at 25 ± 0.5 °C . The solution is filtered with filter paper into two 100 ml flasks.

The solution from the first 100 ml vessel is evaporated in nitrogen flow and the residue is dried under vacuum at 90 °C until constant weight is reached.

$$XS\% = (100 \times m_1 \times v_0) / (m_0 \times v_1)$$

$m_0$ = initial polymer amount ( g)
$m_1$ = weight of residue (g)
$v_0$ = initial volume (ml)
$v_1$ volume of analysed sample ( ml)

c. Bulk density (BD)

Bulk density of the polymer is measured according to ASTM D 1895

**Examples**

**Example 1**

*Catalyst*

A highly active propylene polymerisation catalyst of Ziegler-Natta (ZN) type prepared by emulsion method according to WO2004/029112, example 8 with the exception that instead of triethyl aluminium as A1 compound diethyl aluminium chloride was used in catalyst preparation.

*Catalyst Feeding*

Catalyst was fed continuously to the polymerisation in oil slurry. The method is described in patent application EP 1489110.

*Co-catalyst and Donor*

Triethylaluminium (TEAL) was used as a co-catalyst with constant feed ratio of 150 g TEAL / ton propylene. Dicyclopentyl dimethoxy silane (D) was used as an external donor with Al/D mol ratio 10 mol/mol. Actual donor feed was about 30 g/ton propylene.

*Prepolymerisation stage*

The catalyst was flushed with propylene to the prepolymerisation reactor in which also TEAL and donor were fed. Prepolymerisation reactor, CSTR (continuous stirred tank reactor) was operated at 30°C and 55 barg pressure. The residence time of the particles in propylene slurry was about 0.5 h.
Hydrogen / propylene feed ratio to the prepolymerisation reactor was 2.6 mol/kmol.

*Catalyst poisoning agent feed*

Catalyst poisoning agent was fed to the prepolymerisation reactor together with catalyst in order to prevent stickiness of the polymer and fouling of the loop reactor.
As poisoning agent was used a mixture of isopropanol (25 wt-%), and dinonylnaphthyl sulphonic acid (75 wt-%). It was used as dissolved in toluene.

The catalyst was contacted with the catalyst poisoning agent in the pipeline. The residence time was 1.5 - 3 minutes in this pipeline. The catalyst poisoning agent feed was 0.88 wt-ppm calculated from the total propylene feed to the prepolymerisation and loop reactor (155 kg).

*Liquid phase polymerisation stage (Loop Reactor)*

The prepolymerised catalyst component was used in loop reactor and gas phase reactor (GPR) connected in series.
The loop reactor was operated at 70 °C and in 55 bar pressure.
Propylene feed to pre-polymerisation and loop reactor was in total 155 kg/h. Polymer residence time in loop reactor was around 0.5-0.75 h and the production rate was 20-30 kg/h.
Ethylene was used as a co-monomer.

*Gas phase polymerisation stage (Gase phase reactor)*

Polymer slurry was fed from loop to the gas phase reactor (GPR) as a direct feed without flash. The GPR was operated at 80°C temperature and the pressure was 30 bar. Propylene concentration was about 75 mol-%. Ethylene was used as co-monomer. The ethylene / propylene molar ratio was 22-30 mol/kmol.
Polymer residence time in GPR was about 3 - 4 hours.

*Product Control*

Random propylene copolymer was produced in both reactors. Ethylene content of the product was controlled by ethylene feed.
The production split between loop and GPR was controlled to be close to 50/50%.
The MFR (2,16 kg / 230°C) was controlled to be about 2 in both reactors (loop and GPR) by hydrogen feed.

*Results*

Ethylene content in the loop product was 4.3 wt-%, Measured XS values were 6.5 - 9 wt-%.
No fouling was observed in loop after 5 days running. No stickiness of the polymer was found.
Power consumption of the loop circulation pump was on normal level.
Polymerisation conditions and product characteristics are shown in Table 1.

**Example 2**

The procedure was the same as in Example 1 but the catalyst poisoning agent feed was 1.75 wt-ppm calculated from total propylene feed to prepolymerisation and loop reactor (155 kg).

*Results*

The results are equivalent to those described in Example 1.
No effect on catalyst productivity was observed when catalyst poisoning agent feed was doubled.
Ethylene content in the loop product was 4.2 wt-%. Measured XS values were 6.7 - 9.2 wt-%
No fouling was observed in loop after 3 days running.
No stickiness of the polymer was found.
Power consumption of the loop circulation pump was on normal level.
Polymerisation conditions and product characteristics are shown in Table 1.

**Comparative Example 1**

The procedure was the same as in Example 1 but no catalyst poisoning agent was fed to the pre-polymerisation reactor.

*Results*

Stability of the loop process was poor. Even if the XS content (5.2 - 6.1 wt-%) and loop product ethylene content (2.85 wt-%) were lower compared to Example 1 and 2.

Stickiness of the polymer was observed in loop product sampling system.

Signs of increased friction and grown resistance of flow were seen in loop reactor. This was seen as increased power demand of recycling pump.

Polymerisation conditions and product characteristics are shown in Table 1.

**Example 3**

The procedure was the same as in Example 1 but the MFR (2.16 kg / 230°C) was controlled by hydrogen feed to be 14 -15 in the loop reactor and 10-12 in GPR.

Catalyst poisoning agent feed was 1.75 wt-ppm calculated from total propylene feed to pre-polymerisation and loop reactor (155 kg).

*Results*

Ethylene content in the loop product was 4.1 wt-%. Measured XS values were 8.7 - 11.6 wt-%.

No fouling was observed in loop after 5 days running.

No stickiness of the polymer was found.

Power consumption of the loop circulation pump was on low level. Polymerisation conditions and product characteristics are shown in Table 1.

**Comparative Example 2**

The procedure was the same as in Example 1 but no catalyst poisoning agent was fed to the pre-polymerisation reactor.

Higher ethylene content in loop product was tried to reach compared to the Example 2.

*Results*

There was a lot of operability problems in loop reactor when ethylene content of 3.2-3.5 wt-% was reached in loop product. Stability of the loop process was bad.

Stickiness of the polymer was observed in loop product sampling system.

Friction increased and resistance of flow grew in loop reactor. This resulted in increased power demand of recycling pump, which limited the production.

Finally after 12 hours run loop reactor fouled badly and the outlet of the reactor plugged and the run had to be terminated. The reactor was opened and there was a considerable fouling layer on the reactor walls.

In the beginning the product was transferred to the GPR and samples were managed to be taken. However there are no final product characteristics due to the fouling and plugging of the loop reactor.

Table 1. Polymerisation conditions and product characteristics.

|  | Example 1 | Example 2 | Compar. 1 | Example 3 | Compar. 2 |
|---|---|---|---|---|---|
| **Product type** | Random PP | Random PP | Random PP | Random PP | Random PP |
| Catalyst feed (g/h) | 0.97 | 0.93 | 0.92 | 0.77 | 1.16 |
| Catalyst poisoning agent (wt-ppm) | 0.88 | 1.75 | 0 | 1.75 | 0 |
|  |  |  |  |  |  |
| Loop H2/C3 ratio (mol/kmol) | 0.80 | 0.77 | 0.55 | 7.39 | 0.73 |
| Loop Residence time (h) | 0.68 | 0.72 | 0.73 | 0.49 | 0.66 |
| Loop Production rate (kg/h) | 22 | 23.2 | 24.7 | 26.3 | 27.2 |
| Loop Catalyst productivity (kg/g) | 23 | 25 | 31 | 35 | 23 |
| Loop Solid concentration (%) | 21 | 23 | 24 | 25 | 24 |
| Process stability in loop | GOOD | GOOD | POOR | GOOD | BAD |
| Loop Split % | 56 | 48 | 52 | 54 | 46 |
| Loop product MFR$_2$(g/10 min) | 2.08 | 1.83 | 2.00 | 14.4 | 1.68 |

(continued)

| | Example 1 | Example 2 | Compar. 1 | Example 3 | Compar. 2 |
|---|---|---|---|---|---|
| **Product type** | Random PP | Random PP | Random PP | Random PP | Random PP |
| Loop product XS (wt-%) | 6.5 - 9.0 | 6.7-9.2 | 5.2 - 6.1 | 8.7 - 11.6 | 5.6 |
| Loop product C2 content (wt-%) | 4.3 | 4.2 | 2.85 | 4.1 | 3.5 |
| Loop product BD (kg/m3) | 368 | 367 | 236 | 361 | 357 |
| GPR C3= partial pressure (kPa) | 2436 | 2428 | 2375 | 2412 | 2394 |
| GPR H2/C3 ratio (mol/kmol) | 4.7 | 4.7 | 7.8 | 71 | 4.2 |
| GPR C2/C3 ratio (mol/kmol) | 28.0 | 28.7 | 22.2 | 46.1 | 22.9 |
| GPR Residence time (h) | 4.11 | 3.3 | 3.85 | 3.97 | 3.11 |
| GPR Production rate (kg/h) | 24 | 26 | 23 | 22 | 32 |
| Loop+GPR Cat productivity (kg/g) | 46.7 | 50.6 | 53.8 | 56.2 | 55.5 |
| Process stability in GPR | GOOD | GOOD | POOR | GOOD | POOR |
| GPR Split (%) | 44 | 52 | 48 | 46 | 54 |
| GPR product MFR$_2$(g/10min) | 1.49 | 1.35 | 1.51 | 10.19 | 1.24 |
| GPR product XS (wt-%) | 8.2 | 6.3 | 4.7 | 14.1 | 6.1 |
| GPR product C2 content (wt-%) | 4.01 | 4.08 | 2.97 | 5.09 | 3.54 |

**Claims**

1.  A method for producing an alpha-olefin polymer in the presence of a particulate alpha-olefin polymerisation catalyst in a polymerisation process comprising at least one slurry phase polymerisation step, wherein the catalyst particles are contacted with a catalyst poisoning agent before contacting alpha-olefin monomers in said slurry phase polymerisation step
    **characterized in that**
    the catalyse poisoning agent is selected from an alcohol having from 1 to 6 carbon atoms, and a combination thereof with an organic compound having at least one polar functional group, such as -OH, -O-, -OR, -COOH, -SO$_2$(OH), or -(C=O)-NH- group, and
    the alpha-olefin polymer is a propylene random copolymer with ethylene and the total comonomer content is from 2 to 9 wt-%.

2.  The method according to claim 1, wherein the process is a multistage process comprising at least two polymerisation stages, the first of which comprising said at least one slurry phase polymerisation step and optionally a gas phase polymerisation step.

3.  The method according to any claim 1 or 2, wherein said slurry phase polymerisation step is carried out in bulk, and preferably in a loop reactor or a continuous stirred tank reactor (CSTR).

4.  The method according to any of the preceding claims, wherein a second stage polymerisation is carried out in at least one gas phase reactor.

5.  The method according to any of the preceding claims, wherein the polymerisation process comprises a pre-polymerisation step preceding said first slurry phase polymerisation step.

6.  The method according to any of the preceding claims, wherein the catalyst poisoning agent is an agent capable of poisoning the surface of the catalyst particles.

7.  The method according to any of the preceding claims, wherein the catalyst poisoning agent is selected from an alcohol having 1 to 3 carbon atoms, or a mixtures thereof with an acidic compound.

8. A method according to any of claims 5 to 7, wherein the catalyst particles are contacted with the catalyst poisoning agent during or before the prepolymerisation step.

9. The method according to any of the preceding claims, wherein the alpha-olefin polymerisation catalyst is a Ziegler-Natta or single site catalyst.

10. The method according to claim 9, wherein the catalyst comprises a catalyst component in particle form, a co-catalyst component and optionally an external donor.

11. The method according to claim 10, wherein the catalyst poisoning agent is contacted with the catalyst particles essentially before a reaction between the cocatalyst component and catalyst particles takes place.

12. The method according to any of the preceding claims, wherein the amount of the catalyst poisoning agent to be contacted with catalyst particles is 0.1 to 10.0 wt.- ppm, preferably 0.1 to 5 wt.-ppm, more preferably 0.2 to 3 wt.-ppm, calculated from the total alpha-olefin feed into the prepolymerisation and first slurry polymerisation reactor.

13. The method according to any of the preceding claim, wherein the catalyst poisoning agent is included as one component of an antifouling composition.

14. The method according to any of the preceding claims, wherein propylene is copolymerised with ethylene in the first polymerisation stage comprising at least one bulk reactor and polymerisation is continued in the second stage in a gas phase reactor.

15. A method for reducing fouling in an alpha-olefin polymerisation process comprising polymerisation of one or more alpha-olefins in at least one slurry phase polymerisation step in the presence of a particulate alpha-olefin polymerisation catalyst by contacting polymerisation catalyst particles with a catalyst poisoning agent before contacting catalyst particles with said alpha-olefin monomer(s) in said slurry phase polymerisation step, wherein the catalyst poisoning agent is selected from an alcohol having from 1 to 6 carbon atoms and a combination thereof with an organic compound having at least one polar functional group, such as -OH, -O-, -OR, -COOH, $-SO_2(OH)$, or -(C=O)-NH- group, and the alpha-olefin polymer is a propylene random copolymer with ethylene and the total comonomer content is from 2 to 9 wt-%.

**Patentansprüche**

1. Verfahren zum Herstellen eines $\alpha$-Olefin-Polymers in Gegenwart eines partikelförmigen Katalysators für die Polymerisation von $\alpha$-Olefinen in einem Polymerisationsverfahren, das zumindest einen Polymerisationsschritt in der Suspensionsphase umfaßt,
wobei die Katalysatorpartikel vor dem Kontakt der $\alpha$-Olefin-Monomere in dem Polymerisationsschritt in der Suspensionsphase mit einem Katalysatorgift in Kontakt gebracht werden,
**dadurch gekennzeichnet, dass**
das Katalysatorgift aus einem Alkohol, der 1 bis 6 Kohlenstoffatome aufweist, und einer Kombination daraus mit einer organischen Verbindung mit wenigstens einer polaren funktionellen Gruppe, wie einer -OH, -O-, -OR, -COOH, $-SO_2(OH)$ oder -(C=O)-NH-Gruppe,
ausgewählt ist, und
das $\alpha$-Olefin Polymer ein Propylen-Random-Copolymer mit Ethylen und einem absoluten Comonomergehalt von 2 bis 9 Gew.-% ist.

2. Verfahren nach Anspruch 1, wobei das Verfahren ein mehrstufiges Verfahren ist, das mindestens zwei Polymerisationsstufen aufweist, wobei die erste davon den zumindest einen Polymerisationsschritt in der Suspensionsphase und gegebenenfalls einen Polymerisationsschritt in der Gasphase umfaßt.

3. Verfahren nach einem der vorstehenden Ansprüche, wobei der Polymerisationsschritt in der Suspensionsphase in Masse und vorzugsweise in einem Reaktor mit geschlossenem Kreis oder einem kontinuierlichen gerührten Tankreaktor (CSTR) durchgeführt wird.

4. Verfahren nach Anspruch 1 oder 2, wobei die Polymerisation der zweiten Stufe in zumindest einem Gasphasenreaktor durchgeführt wird.

**5.** Verfahren nach einem der vorstehenden Ansprüche, wobei das Polymerisationsverfahren einen Vorpolymerisationsschritt aufweist, der dem ersten Polymerisationsschritt in der Suspensionsphase vorausgeht.

**6.** Verfahren nach einem der vorstehenden Ansprüche, wobei das Katalysatorgift ein Mittel ist, das die Oberfläche der Katalysatorpartikel vergiften kann.

**7.** Verfahren nach einem der vorstehenden Ansprüche, wobei das Katalysatorgift aus einem Alkohol mit 1 bis 3 Kohlenstoffatomen oder einem Gemisch davon mit einer sauren Verbindung ausgewählt ist.

**8.** Verfahren nach einem der Ansprüche 5 bis 7, wobei die Katalysatorpartikel während des Vorpolymerisationsschrittes oder davor mit dem Katalysatorgift in Kontakt gebracht werden.

**9.** Verfahren nach einem der vorstehenden Ansprüche, wobei der Katalysator für die Polymerisation von $\alpha$-Olefinen ein Ziegler-Natta-Katalysator oder Katalysator mit einheitlichen aktiven Zentren ist.

**10.** Verfahren nach Anspruch 9, wobei der Katalysator eine Katalysatorkomponente in Partikelform, eine Cokatalysatorkomponente und gegebenenfalls einen externen Donor umfaßt.

**11.** Verfahren nach Anspruch 10, wobei das Katalysatorgift im wesentlichen vor dem Ablauf einer Reaktion zwischen der Cokatalysatorkomponente und Katalysatorpartikein mit den Katalysatorpartikeln in Kontakt gebracht wird.

**12.** Verfahren nach einem der vorstehenden Ansprüche, wobei die Menge des Katalysatorgiftes, die mit Katalysatorpartikeln in Kontakt gebracht werden soll, 0,1 bis 10,0 Gew.-ppm, vorzugsweise 0,1 bis 5 Gew.-ppm, stärker bevorzugt 0,2 bis 3 Gew.-ppm beträgt, und zwar aus der gesamten $\alpha$-Olefin-Beschickung in die Vorpolymerisation und den ersten Suspensionspolymerisationsreaktor berechnet.

**13.** Verfahren nach einem der vorstehenden Ansprüche, wobei das Katalysatorgift als eine Komponente einer Ablagerungen verhindernden Zusammensetzung enthalten ist.

**14.** Verfahren nach einem der vorstehenden Ansprüche, wobei Propylen in der ersten Polymerisationsstufe mit Ethylen copolymerisiert wird, die zumindest einen Massereaktor aufweist, und die Polymerisation in der zweiten Stufen in einem Gasphasenreaktor fortgesetzt wird.

**15.** Verfahren zur Verminderung von Ablagerungen bei einem Verfahren zur Polymerisation von $\alpha$-Olefinen, umfassend das Polymerisieren von einem oder mehreren $\alpha$-Olefinen in zumindest einem Polymerisationsschritt in der Suspensionsphase in Gegenwart eines partikelförmigen Katalysators für die Polymerisation von $\alpha$-Olefinen durch Inkontaktbringen von Polymerisationskatalysatorpartikeln mit einem Katalysatorgift, bevor Katalysatorpartikel in dem Polymerisationsschritt in der Suspensionsphase mit dem (den) $\alpha$-OlefinMonomer(en) in Kontakt gebracht werden, worin das Katalysatorgift aus einem Alkohol, der 1 bis 6 Kohlenstoffatome aufweist, und einer Kombination daraus mit einer organischen Verbindung mit wenigstens einer polaren funktionellen Gruppe, wie einer -OH, -O-, -OR, -COOH, -SO$_2$(OH) oder -(C=O)-NH-Gruppe, ausgewählt ist, und das $\alpha$-Olefin Polymer ein Propylen-Random-Copolymer mit Ethylen und einem absoluten Comonomergehalt von 2 bis 9 Gew.-% ist.

**Revendications**

**1.** Procédé de production d'un polymère d'alpha oléfines en présence d'un catalyseur de polymérisation d'alpha oléfines particulaire dans un procédé de polymérisation comprenant au moins une étape de polymérisation en phase en suspension,
où les particules de catalyseur sont mises en contact avec un agent d'empoisonnement de catalyseur avant d'entrer en contact avec les monomères d'alpha oléfines dans ladite étape de polymérisation en phase en suspension **caractérisé en ce que**
l'agent d'empoisonnement de catalyseur est choisi à partir d'un alcool possédant de 1 à 6 atomes de carbone, et une combinaison de celui-ci et d'un composé organique possédant au moins un groupe fonctionnel polaire, tel qu'un groupe -OH, -O-, -OR, -COOH, -SO$_2$(OH), ou -(C=O)-NH-, et
le polymère d'alpha oléfines est un copolymère aléatoire de propylène et d'éthylène et la teneur totale en comonomères va de 2 à 9 % en poids.

**2.** Procédé selon la revendication 1, dans lequel le procédé est un procédé à stades multiples comprenant au moins deux stades de polymérisation, le premier d'entre eux comprenant ladite au moins une étape de polymérisation en phase en suspension et éventuellement une étape de polymérisation en phase gazeuse.

**3.** Procédé selon l'une quelconque des revendications 1 ou 2, dans lequel ladite étape de polymérisation en phase en suspension est réalisée en masse, et de préférence dans un réacteur à boucle ou un réacteur à cuve agitée continu (CSTR).

**4.** Procédé selon l'une quelconque des revendications précédentes, dans lequel un deuxième stade de polymérisation est réalisé dans au moins un réacteur en phase gazeuse.

**5.** Procédé selon l'une quelconque des revendications précédentes, dans lequel le procédé de polymérisation comprend une étape de pré-polymérisation précédant ladite première étape de polymérisation en phase en suspension.

**6.** Procédé selon l'une quelconque des revendications précédentes, dans lequel l'agent d'empoisonnement de catalyseur est un agent capable d'empoisonner la surface des particules de catalyseur.

**7.** Procédé selon l'une quelconque des revendications précédentes, dans lequel l'agent d'empoisonnement de catalyseur est choisi à partir d'un alcool possédant de 1 à 3 atomes de carbone, ou des mélanges de celui-ci et d'un composé acide.

**8.** Procédé selon l'une quelconque des revendications 5 à 7, dans lequel les particules de catalyseur sont mises en contact avec l'agent d'empoisonnement de catalyseur durant ou avant l'étape de pré-polymérisation.

**9.** Procédé selon l'une quelconque des revendications précédentes, dans lequel le catalyseur de polymérisation d'alpha oléfines est un catalyseur de Ziegler-Natta ou un catalyseur à site unique.

**10.** Procédé selon la revendication 9, dans lequel le catalyseur comprend un composant de catalyseur sous forme de particules, un composant de co-catalyseur et éventuellement un donneur externe.

**11.** Procédé selon la revendication 10, dans lequel l'agent d'empoisonnement de catalyseur est mis en contact avec les particules de catalyseur essentiellement avant qu'une réaction entre le composant de co-catalyseur et les particules de catalyseur ait lieu.

**12.** Procédé selon l'une quelconque des revendications précédentes, dans lequel la quantité de l'agent d'empoisonnement de catalyseur devant être mis en contact avec les particules de catalyseur est égale à 0,1 à 10,0 poids - ppm, de préférence 0,1 à 5 poids - ppm, de manière davantage préférée 0,2 à 3 poids - ppm, calculée d'après la charge d'alpha oléfines dans le réacteur de pré-polymérisation et le premier réacteur de polymérisation en phase en suspension.

**13.** Procédé selon l'une quelconque des revendications précédentes, dans lequel l'agent d'empoisonnement de catalyseur est inclus sous forme d'un composant d'une composition anti-dépôt.

**14.** Procédé selon l'une quelconque des revendications précédentes, dans lequel du propylène est copolymérisé avec de l'éthylène dans le premier stade de polymérisation comprenant au moins un réacteur en masse et la polymérisation est poursuivie dans le second stade dans un réacteur en phase gazeuse.

**15.** Procédé de réduction de dépôt dans un procédé de polymérisation d'alpha oléfines comprenant une polymérisation d'une ou plusieurs alpha oléfines dans au moins une étape de polymérisation en phase en suspension en présence d'un catalyseur de polymérisation d'alpha oléfines particulaire en mettant en contact des particules de catalyseur de polymérisation avec un agent d'empoisonnement de catalyseur avant de mettre en contact des particules de catalyseur avec ledit ou lesdits monomère(s) d'alpha oléfines dans ladite étape de polymérisation en phase en suspension, dans lequel l'agent d'empoisonnement de catalyseur est choisi à partir d'un alcool possédant de 1 à 6 atomes de carbone et une combinaison de celui-ci et d'un composé organique possédant au moins un groupe fonctionnel polaire, tel qu'un groupe -OH, -O-, -OR, -COOH, -SO$_2$(OH), ou -(C=O)-NH-, et le polymère d'alpha oléfines est un copolymère aléatoire de propylène et d'éthylène et la teneur totale en comonomères va de 2 à 9 % en poids.

**EP 1 995 259 B2**

**REFERENCES CITED IN THE DESCRIPTION**

**Patent documents cited in the description**

- EP 1183285 A1
- EP 0820474 A1
- EP 0453116 A1
- WO 2003033543 A
- EP 0549252 A
- US 4634747 A
- US 4558025 A
- WO 03000757 A
- WO 03000754 A
- WO 2004029112 A
- WO 03106510 A
- WO 03051934 A
- EP 1489110 A